# EUROPEAN PATENT SPECIFICATION

(11) **EP 4 531 341 B1**
(45) Date of publication and mention of the grant of the patent: **29.04.2026**
(21) Application number: 24202049.3
(22) Date of filing: 23.09.2024
(51) Int. Cl.: H04L 9/40, H04L 51/212, G06V 10/82, G06N 3/045, G06F 18/2413, G06V 10/25, G06V 10/764, G06V 20/62

(54) **METHOD FOR DETECTING PHISHING ATTACKS, AND CORRESPONDING SYSTEM AND COMPUTER PROGRAM PRODUCT**
VERFAHREN ZUR ERKENNUNG VON PHISHING-ANGRIFFEN SOWIE ENTSPRECHENDES SYSTEM UND COMPUTERPROGRAMMPRODUKT
PROCÉDÉ DE DÉTECTION D'ATTAQUES D'HAMEÇONNAGE, SYSTÈME ET PRODUIT PROGRAMME D'ORDINATEUR CORRESPONDANTS

(30) Priority: 26.09.2023 IT 202300019872
(43) Date of publication of application: 02.04.2025
(73) Proprietor: Aizoon S.r.l., 10146 Torino (TO) (IT)
(72) Inventor: GRAZIANO, Giovanni, 10146 Torino (TO) (IT); UCCI, Daniele, 10146 Torino (TO) (IT); BISIO, Federica, 10146 Torino (TO) (IT)
(74) Representative: Buzzi, Notaro & Antonielli d'Oulx S.p.A.

(56) References cited:
- CN-A- 114 511 741
- US-A1- 2019 014 149
- US-A1- 2019 319 905
- US-B1- 10 834 128
- CHIEW KANG LENG ET AL: "Utilisation of website logo for phishing detection", COMPUTERS & SECURITY, ELSEVIER SCIENCE PUBLISHERS. AMSTERDAM, NL, vol. 54, 7 August 2015 (2015-08-07), pages 16 - 26, XP029339493, ISSN: 0167-4048, DOI: 10.1016/J.COSE.2015.07.006

## Description

### Technical field

The embodiments of the present disclosure relate to techniques for detecting phishing attacks.

### Background

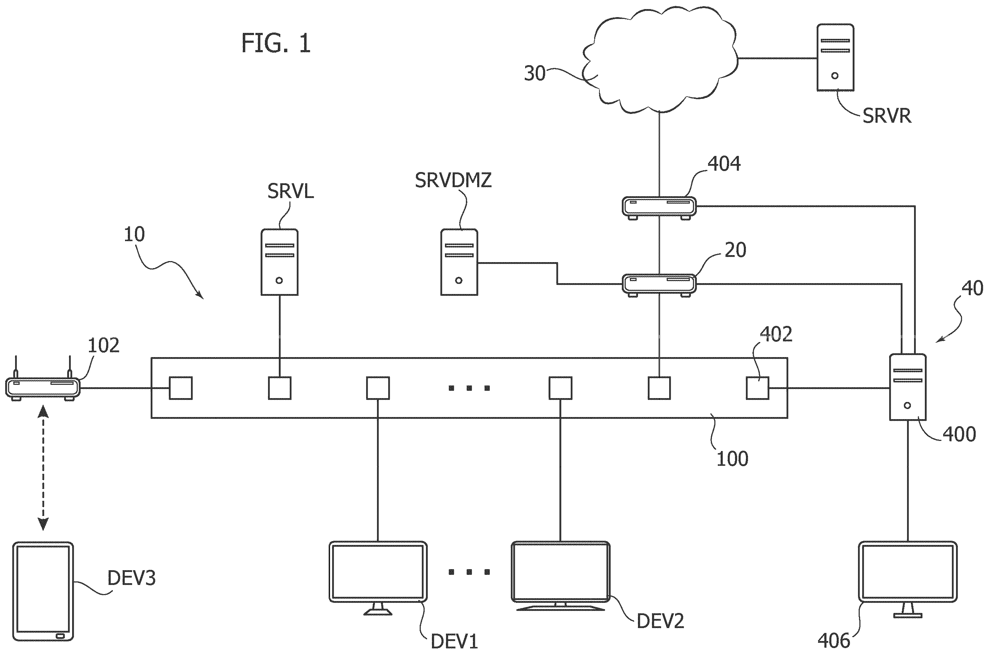

Figure 1 shows a typical communication system. In the example considered, the system comprises a router 20 configured for exchanging data between a local network LAN (Local-Area Network) 10 and a WAN (Wide-Area Network) 30, such as the Internet. For this purpose, the router 20 has an interface configured for communication with the WAN 30. This interface may be, *inter alia:*
- a DSL (Digital Subscriber Line) modem;
- a mobile communication interface, such as a GSM (Global System for Mobile Communications), a CDMA (Code-Division Multiple Access) transceiver, a W-CDMA (Wideband Code-Division Multiple Access) transceiver, a UMTS (Universal Mobile Telecommunications System) transceiver, an HSPA (HighSpeed Packet Access) transceiver, and/or an LTE (Long-Term Evolution) transceiver;
- an Ethernet communication interface (copper and/or optical fibre); and/or
- a Wi-Fi communication interface, compatible with one of the versions of the IEEE 802.11 standard.

Typically, the router 20 further comprises one or more communication interfaces for connection to the LAN 10. For instance, in Figure 1, the LAN 10 is a wired network made up of one or more switches 100, constituted, for example, by Ethernet ports for copper wiring (typically RJ45 cables), and/or optical fibres. Consequently, one or more local clients DEV may be connected to the LAN 10 through one or more switches 100. For instance, illustrated in Figure 1 are a fixed computer DEV1 and a notebook DEV2, i.e., computers with a wired network card. In general, the LAN 10 may also comprise wireless devices, capable of communicating with one another and with the WAN 30, for example, via Wi-Fi. In this case, the LAN 10 envisages one or more access points 102, which are connected to one or more switches 100. For instance, represented in Figure 1 is a local client DEV3, which could be either a notebook or a tablet, i.e., a computer with a wireless network card. Exchange of data between the various devices of the network may be obtained with various protocols. For instance, frequently exchange of data between two devices is obtained via the IP (Internet Protocol). The various details of the IP and of the various layers of the network protocols are well known to the person skilled in the art. Consequently, the local clients DEV can access at least one of the following:
- a local server SRVL connected to the LAN 10;
- a remote server SRVR connected to the WAN 30; and
- a server SRVDMZ connected to a so-called DMZ (DeMilitarized Zone) managed by the router 20.

The person skilled in the art will obviously note that modern computer networks may be much more complex. In fact, the LAN 10 could be also be made up of a very large number of local clients DEV, servers SRVL and/or SRVDMZ, and further components of the infrastructure of the LAN 10 (for example, switches 100 and/or access points 102, routers 20, etc.). Moreover, the LAN may also comprise a plurality of LAN sub-networks, connected through a VPN (Virtual Private Network). Again, to improve network security, one or more of the devices may be configured as firewalls or in general for executing functions of data packet filtering: for example, the switch 100, the access point 102, and/or the router 20 may implement filtering functions, whereas the servers SRVL and/or SRVDMZ may function as firewalls.

To improve network security even further, modern computer networks frequently rely upon antivirus software, installed on the various computers (DEV, SRVL and/or SRVDMZ). The antivirus applications typically monitor the programs that are downloaded and executed by a computer but, also, the traffic generated by the corresponding computer for the protocols HTTP (HyperText Transfer Protocol), HTTPS (HyperText Transfer Protocol over Secure Socket Layer/Transport Layer Security), POP (Post Office Protocol), in particular version 3 (POP3), IMAP (Internet Message Access Protocol), SMTP (Simple Mail Transfer Protocol), SMB (Server Message Block), etc.

Recently, networks have been enriched with platforms for monitoring network security, NSMP (Network-Security Monitoring Platform) or SNMP (Security Network Monitoring Platform), which gather and process data flows observed in quasi-real time to identify possible computer attacks or anomalous behaviours in the network being monitored, such as the LAN 10 and/or the DMZ.

In particular, as illustrated in Figure 1, a platform of an SNMP type comprises at least one computer 400. This computer 400 receives from various data-traffic sensors a copy of the data that are exchanged between different devices. Consequently, by analysing the data exchange, the computer 400 can detect possible anomalous behaviours. For instance, as illustrated in Figure 1, these data-traffic sensors may be implemented with at least one of the following:
- a port of the so-called SPAN (Switched Port Analyzer) type, or one of its variants, such as RSPAN (Remote SPAN), PSPAN (Port-based SPAN), or VSPAN (VLAN-based SPAN), in which a managed switch 100 is configured to send a copy of the traffic exchanged via the switch 100 to the computer 400;
- a router 20 (or a firewall) configured to send a copy of the traffic exchanged via the router 20 (or the firewall) to the computer 400; or
- a dedicated TAP (Terminal Access Point) 404, whether passive or active, configured to send a copy of the traffic that passes through the TAP 404 to the computer 400.

Frequently, these data-traffic sensors do not necessarily send a copy of all the traffic, but may send:
- a copy of the traffic that satisfies given rules, for example with reference to the source port and/or the destination port of the switch 100, to the source and/or destination IP address, to the TCP (Transmission Control Protocol) port or the UDP (User Datagram Protocol) port, to the higher-level protocol used, such as HTTP, etc.; and/or
- pre-processed data, where the sensor has already extracted some characteristics from the data traffic, the so-called metadata.

Consequently, the computer 400 receives a copy of the traffic containing data and/or metadata that may be analysed for determining possible anomalous behaviours. For instance, the present applicant markets a platform of an SNMP type under the name aramis^{®}.

An SNMP can incorporate various software components or modules that analyse, in parallel, the various characteristics of the data traffic.

In the simplest case, a component can control, *inter alia*, that within the data or metadata of the traffic monitored there are no IoCs (Indicators of Compromise) and/or signatures that may be put down to malicious activity. For instance, these IoCs and/or malicious signatures may be downloaded from a remote server SRVR connected to the WAN 30, such as public or proprietary sources. For instance, in the simplest case, these IoCs may correspond to given pre-set rules, such as IP and/or URL (Uniform Resource Locator) addresses of sites that distribute malware. On the other hand, the signatures may be used, in a modality similar to a traditional antivirus, to compare the signature of a file downloaded (for example, by means of the protocol HTTP, POP or IMAP) with a list of signatures of malicious files. For instance, such file signatures may be calculated with a hash function, such as MD5, SHA-1, SHA-2 (for example, SHA-256) or SHA-3.

Recently, machine learning has been applied also in the field of computer security for the purpose of analysing the network traffic and automatically detecting behaviours that deviate from the normal and legitimate behaviour of the network, i.e., behaviours that may be indicators of anomalous and/or malicious activity. For instance, a machine-learning component may use one or more mathematical models with a supervised or non-supervised approach for modelling the normal behaviour of each computer DEV and/or server SRVL/SRVDMZ within the LAN 10 and/or the DMZ. Some solutions also enable monitoring of groups of devices, for example all the clients DEV that exchange traffic with the WAN. In general, for supervised approaches, training of the models may be carried out during specific steps, upon request, and/or periodically. Consequently, once the mathematical model has been trained, it may be used for classifying the current behaviour of the exchange of data in the network being monitored. Hence, whereas the first component is deterministic, the machine-learning component automatically adapts to the behaviour of a given network.

Moreover, another component can detect more complex anomalous behaviours by analysing the traffic through more sophisticated advanced analytics called Advanced Cybersecurity Analytics (ACA). The purpose of these analytics is hence to identify sequences of suspect events that with a certain likelihood may be put down to phases of an attack. These analytics are typically based on the mathematical modelling of malicious behaviours through statistical and/or machine-learning approaches.

The use of these three components makes it possible to alert in a timely way an operator, i.e., a so-called analyst, in the event of an anomaly or attack, for example through the use of targeted graphic displays and/or by sending notifications to the operator. For instance, for this purpose, the computer 400 may be connected to one or more analysis terminals 406. In general, whereas represented in Figure 1 are direct connections between the data-traffic sensors 20, 402, 404 and the computer 400, and between the computer 400 and the terminal 406, in practice, these connections may be implemented via the LAN 10 and/or preferably via a dedicated network. Moreover, as mentioned previously, the platform 400 could comprise even more than one computer that implement different components and/or analyse different traffic.

Consequently, a platform for monitoring network security makes available a set of analytics capable of identifying suspect events that may be put down to an attack.

In this context, one of the most common attacks is the phishing attack. In a phishing attack, a person is contacted by somebody who pretends to be a close personal contact or a legitimate institution. The aim is to induce the person to provide sensitive data, such as the number of his current account, the data of a debit or credit card, and/or his username/password. In particular, phishing via e-mail refers to a scam whereby deceptive e-mails are sent. The e-mails are typically designed to appear exactly like the ones sent by companies or legitimate institutions. These e-mails contain links that frequently lead to "fake" or "spoofed" websites, in which the visitors are asked to supply personal information. These fake URL links may be provided also via other channels, such as SMS messages or social-media sites.

There have thus been proposed solutions for identifying potential phishing attacks. In general, these solutions can detect a phishing attack by analysing the messages, such as e-mails, that may supply the link to a fake site and/or contain an HTML code that reproduces pages similar to webpages. For instance, typically the phishing e-mail and/or the fake website comprise text and/or graphic contents which are reproduced exactly like the original ones of the legitimate company or the purpose of which is to create a similar visual appearance.

Consequently, to identify a potential phishing attack it is possible to analyse the contents of the e-mail or of the webpage, and the corresponding data identifying the sender, such as the address of the sender of the e-mail and possibly other data, such as data identifying the SMTP server that has sent the e-mail, or the URL of the webpage and possibly other data, such as the IP address of the server associated to the URL and/or possible SSL or TLS certificates associated to the webpage.

In the simplest phishing-detection solutions, the algorithm analyses the code of the e-mail or webpage, for example typically the HTML code of the e-mail or webpage. However, a hacker can obfuscate the code of the webpage or e-mail to prevent it being identified through the analysis of the code but, in any case, the visual similarity of the page should be maintained to deceive a victim. Consequently, solutions have been proposed that obtain a rendering/screenshot, i.e., an image, of the e-mail/webpage, since a page very similar to the original one will usually be obtained.

Subsequently, many phishing-detection systems have concentrated on identification of the pages that, in one way or another, seek to imitate a page belonging to a set of protected pages. For instance, the articles S. Abdelnabi, et al., "Visualphishnet: Zero-day phishing website detection by visual similarity," in Proceedings of the 2020 ACM SIGSAC Conference on Computer and Communications Security, pp. 1681-1698, 2020; L.A.T. Nguyen, et al., "A novel approach for phishing detection using url-based heuristic," in 2014 International Conference on Computing, Management and Telecommunications (ComManTel), pp. 298-303, IEEE, 2014; M. N. Feroz, et al., "Phishing url detection using url ranking," in 2015 IEEE International Congress on Big Data, pp. 635-638, IEEE, 2015; A. A. Ahmed, et al., "Real time detection of phishing websites," in 2016 IEEE 7th Annual Information Technology, Electronics and Mobile Communication Conference (IEMCON), pp. 1-6, IEEE, 2016, describe solutions in which a list of authentic sites is obtained, and a machine-learning model is trained to recognise the graphic appearance of these sites. Consequently, the trained algorithm is able to determine whether the rendering/screenshot of a webpage has an appearance similar to any one of the authentic pages. Next, by comparing the URL of the webpage with the URL of the original site, mainly taking into account the domain, the system is able to identify websites that are likely to correspond to phishing sites. However, since the graphic appearance of the sites may frequently change, and a certain degree of similarity is sufficient, solutions have been proposed that identify logos in the webpage that a classifier is able to identify. For instance, solutions of this type are described in the articles R. Liu, et al., "Inferring phishing intention via webpage appearance and dynamics: A deep vision based approach," in 31st USENIX Security Symposium (USENIX Security 22), pp. 1633-1650, 2022; Y. Lin, et al., "Phishpedia: A hybrid deep learning based approach to visually identify phishing webpages," in USENIX Security Symposium, pp. 3793-3810, 2021; A. S. Bozkir, et al., "Logosense: A companion HOG based logo detection scheme for phishing web page and e-mail brand recognition," Computers & Security, vol. 95, p. 101855, 2020. These works have in common that a model is able to identify the possible identities of the logos that the spoofed pages can emulate in various ways.

Documents US 2019/014149 A1, US 10,834,128 B1, US 2019/319905 A1, CN 114 511 741 A and Chiew Kang Leng, et al.: "Utilisation of website logo for phishing detection," Computers & Security, Elsevier Science Publishers, Amsterdam, Nl, vol. 54, 7 August 2015, pages 16-26, XP029339493, ISSN: 0167-4048, DOI: 10.1016/J.COSE.2015.07.006, may also be of interest for the present disclosure.

### Summary

Various embodiments of the present disclosure relate to solutions for detecting a phishing attack. According to one or more embodiments, this object is achieved through a method having the distinctive elements specified in the ensuing claims. The embodiments moreover regard a corresponding system, as well as a corresponding computer program product that may be loaded into the memory of at least one computer and comprises portions of software code for executing the steps of the method when the product is run on a computer. As used herein, reference to such a computer program product is meant to be equivalent to reference to a computer-readable means containing instructions for controlling a processing system in order to co-ordinate execution of the method. Reference to "at least one computer" is clearly intended to highlight the possibility of the present disclosure being implemented in a distributed/modular way.

The claims form an integral part of the technical teaching of the description provided herein.

As mentioned before, various embodiments of the present disclosure regard a method for detecting phishing attacks. For instance, this method may be implemented via one or more of the computers described before, for example via an appropriate software programming.

In various embodiments, the method receives a source code of a webpage or e-mail, and respective source data identifying a sender respectively of the webpage or e-mail. For instance, for this purpose the method can receive the source code and the source data of a webpage via the protocol HTTP, and/or the source code and the source data of an e-mail via the protocols POP3, IMAP, or SMTP. Alternatively, the method can intercept an HTTP communication and extract the source code and the source data of a webpage from the HTTP communication, and/or a POP3, IMAP, or SMTP communication and extract the source code and the source data of an e-mail from the POP3, IMAP, or SMTP communication.

Next, the method determines whether the source data are comprised in a first list, where the first list includes data of authorized sources; i.e., the first list is a whitelist. When the source data are comprised in the first list, the method classifies the webpage or the e-mail as safe. Instead, when the source data are not comprised in the first list, the method analyses the webpage or the e-mail. For this purpose, the method generates an image that corresponds to a rendering of the source code and determines, via an object classifier, a list of objects in the image.

In various embodiments, the object classifier comprises a feature extractor, a feature aggregator, and a classifier of aggregated features. In particular, the feature extractor comprises a convolutional neural network configured for receiving the image and supplying at output a plurality of feature maps of different sizes, in which each cell of each feature map comprises a feature vector. The feature aggregator is configured for generating one or more aggregated-feature maps of different sizes, in which each cell of a respective aggregated-feature map comprises an aggregated-feature vector. Finally, the classifier is configured for estimating the presence of an object in each cell of each aggregated-feature map, as a function of the respective aggregated-feature vector; the classifier is configured for identifying a plurality of object classes and supplying, for each cell and for each object class, respective data indicating the probability that the respective cell comprises an object that belongs to the respective object class. In particular, in various embodiments, the classifier is trained to detect a plurality of reference logos, where each object class corresponds to a respective reference logo, where each reference logo corresponds to a protected logo. In particular, since the classifier should detect the main logo, the aggregated-feature maps can have a low resolution. For instance, the height and the width of each aggregated-feature map may be less than 50.

For instance, in various embodiments, the classifier comprises, for each aggregated-feature map, a respective sub-classifier configured for receiving the aggregated-feature vector of a cell of the respective aggregated-feature map and supplying, at output for each object class, respective data indicating a respective probability that the cell comprises an object that belongs to the respective object class.

In various embodiments, each sub-classifier is configured for supplying also data indicating a relative position of an object with respect to the position of the respective cell, and data indicating a relative size of an object with respect to the size of the respective cell. In this case, the object classifier may also comprise a post-processing module configured for generating a list of objects by analysing the data supplied by the classifier to identify objects in the image. In particular, in various embodiments, the post-processing module is configured for applying a non-maximum suppression to the data supplied by the classifier, in particular to identify objects that have been detected in more than one cell, possibly of different aggregated-feature maps. In various embodiments, the object list comprises for each object detected data identifying an object class chosen from among the object classes and data identifying the confidence of the estimate that the image comprises the respective object.

In various embodiments, the object list may also comprise data indicating the position and size of the object in the image. In particular, in various embodiments, these data are used only during a training step of the object classifier; i.e., each sub-classifier may be configured for supplying the data indicating the relative position of an object with respect to the respective cell, and the data indicating the relative size of an object with respect to the respective cell only during the training step.

In various embodiments, the method then analyses the probabilities in order to verify whether the image comprises a main reference logo. For this purpose, the method selects the object class that has the highest probability and determines whether the probability of the class selected is higher than a given threshold. In response to a determination that the probability of the class selected is higher than the threshold, the method selects the selected object class as main reference logo. Otherwise, the method does not select any main reference logo.

Consequently, when no main reference logo has been selected, the webpage or the e-mail does not comprise a protected main logo, and the method can classify the webpage or the e-mail as safe. Otherwise, the method can classify the webpage or the e-mail as a phishing attack.

In various embodiments, the method may also use a blacklist. In this case, the method determines whether the data of the source are comprised in a second list, where the second list comprises data of malicious sources. Consequently, in response to a determination that the source data are comprised in the second list, the method can classify the webpage or the e-mail as a phishing attack.

In various embodiments, the method can also use a third list comprising, for each object class, respective data of authorized sources. In particular, in this case, in response to selecting an object class as main reference logo, the method can determine whether the source data are comprised in the third list. When the source data are comprised in the third list, the method can then classify the webpage or the e-mail as safe. Otherwise, the method can classify the webpage or the e-mail as a phishing attack.

In various embodiments, the method can also analyse the source code of the webpage or e-mail to detect links, and request the source code for each link detected. Consequently, in this case the method may be repeated for each link detected.

### Brief description of the drawings

The embodiments of the present disclosure will now be described with reference to the annexed drawings, which are provided purely by way of nonlimiting example, and in which:
- Figure 1 shows an example of a communication system comprising a network-security monitoring platform;
- Figure 2 shows an example of a webpage rendering;
- Figure 3 shows an embodiment of a method for detecting phishing attacks according to the present description;
- Figure 4 shows an embodiment for obtaining a rendering of an e-mail or webpage in the method of Figure 3;
- Figure 5 shows an embodiment of a mail server configured to obtain the source code of an e-mail;
- Figure 6 shows an embodiment of the analysis of a rendering in the method of Figure 3; and
- Figures 7 and 8 show an embodiment of an object classifier used during the analysis of Figure 5.

### Detailed description

In the ensuing description, numerous specific details are presented to enable an in-depth understanding of the embodiments. The embodiments may be implemented without one or a number of specific details, or with other methods, components, materials, etc. In other cases, well-known operations, materials, or structures are not represented or described in detail so that the various aspects of the embodiments will not be obscured.

Reference throughout this description to "an embodiment" or "one embodiment" is intended to indicate that a particular characteristic, distinctive element, or structure described with reference to the embodiment is comprised in at least one embodiment. Thus, use of the expression "in an embodiment" or "in one embodiment" in various points of this description does not necessarily refer to one and the same embodiment. Moreover, the particular characteristics, distinctive elements, or structures may be combined in any way in one or more embodiments.

The references used herein are provided merely for convenience and do not define the scope or meaning of the embodiments.

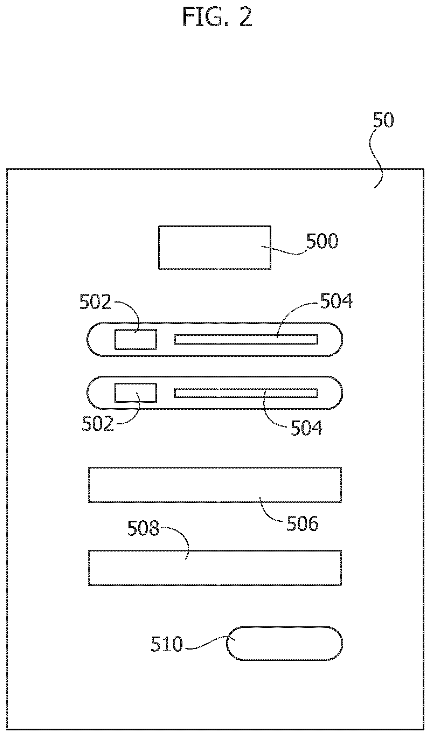

In the following Figures 2 to 8, the parts, elements or components that have already been described with reference to Figure 1 are designated by the same references as those used previously in the above figure; the description of these elements, presented previously, will not be repeated hereinafter so as not to overburden the present detailed description.

As already explained, various embodiments of the present description relate to solutions for detecting, via visual analysis, phishing contents by identifying the main logo of an e-mail or webpage, and by comparing it with a set of pre-set logos. In fact, the company or institutional logo is tendentially the most recognizable visual feature of an e-mail or website. In various embodiments, in the case where a number of logos are present, the solution described herein is able to determine which logo identifies the page, potentially ignoring the others.

For instance, Figure 2 shows a rendering/screenshot of a typical login webpage 50. In particular, typically the page 50 comprises a logo 500, one or more fields for entering access data, such as a field 506 for entering a username and a field 508 for entering a password, and a key 510 for sending the access data.

However, recently some sites make it possible to execute accesses also with the accounts managed by other providers, for example Apple^{®}, Facebook^{®}, GitHub^{®} or Google^{®}. In this case, the login page also comprises keys or links for accessing with these accounts. For instance, each link may comprise a logo 502 identifying the provider and a text 504 identifying the name of the provider. For instance, schematically illustrated in Figure 2 are the links of two providers. Consequently, in this case, the webpage 50 comprises, in addition to the main logo 500, one or more additional logos 502. In particular, in an authentic webpage the main logo 500 is associated to the domain of the webpage, whereas the secondary logos 502 are typically associated to other domains. Consequently, such logos 502 should be neglected during phishing detection.

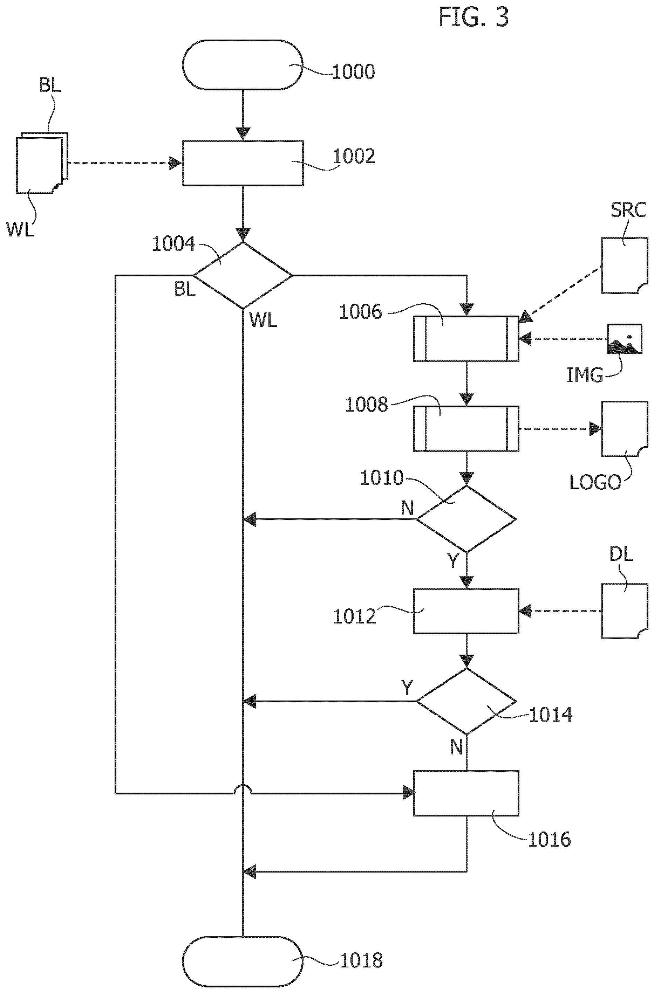

Figure 3 shows an embodiment of a phishing-detection method according to the present description. In general, this method may be implemented via software code executed by one or more computers illustrated in Figure 1, such as a computer DEV that receives an e-mail or webpage, a computer 400 of a platform of an SNMP type 40 that monitors (at least in part) the traffic exchanged in a computer network, one or more local servers SRVR or remote servers SRVR, or a combination of these computers. For instance, as will be described in greater detail hereinafter, in various embodiments, the method may be implemented in a local server or remote server, configured as proxy server for HTTP or HTTPS webpages, or a mail server.

In particular, after a starting step 1000, a computer obtains, in a step 1006, an image IMG of an e-mail or webpage, and corresponding data SRC identifying a source, such as the sender of the e-mail or the link of the webpage. In the case of an e-mail, the source data SRC may include also the domain name of the SMTP (Simple Mail Transfer Protocol) server that has sent the e-mail and/or the corresponding IP address. Instead, in the case of a webpage, the source data SRC may include also the URL of the webpage, and/or the corresponding IP address.

Next, the computer analyses in a step 1008 the image IMG to identify in the image IMG one or more logos of a set of logos that the computer is able to detect, i.e., the logos that are protected by the system. Next, the computer selects a main logo LOGO from among the logos detected. Consequently, in various embodiments, step 1008 supplies data indicating that no main protected logo has been found or data identifying a main protected logo LOGO.

Next, the computer proceeds to a verification step 1010, in which it checks whether a main protected logo has been detected. In the case where the computer has not detected any logo (output "N" from the verification step 1010), the process terminates at an end step 1018.

Instead, in the case where a main protected logo LOGO has been detected (output "Y" from the verification step 1010), the computer proceeds to a step 1012 in which it compares the source data SRC with a list DL that comprises, for each logo of the set of protected logos, one or more authorized sources. For instance, in the case of an e-mail each authorized source may comprise an authorized sender e-mail address and/or data identifying an authorized SMTP server. Instead, in the case of a webpage, each authorized source may comprise an authorized URL and/or data identifying an authorized web server. For instance, the data indicating an authorized server may comprise a FQDN (Fully Qualified Domain Name), a domain name, or an IP address. Consequently, by comparing the source data SRC with the data DL associated to the main logo detected, the computer is able to determine whether the main logo LOGO comes from an authorized source (the data SRC are comprised in the list DL associated to the logo LOGO) or whether the main logo LOGO comes from a non-authorized source (the data SRC are not comprised in the list DL associated to the logo LOGO).

Consequently, in a verification step 1014, the computer may check whether the main logo detected has been supplied by an authorized source or not. In particular, in the case where a main logo has been supplied by an authorized source (output "Y" from the verification step 1014) the process terminates at the end step 1018. Instead, in the case where the main logo has not been supplied by an authorized source (output "N" from the verification step 1014), the computer identifies the e-mail or webpage as phishing attack in step 1016, and then terminates at the end step 1018.

For instance, in response to identification of a phishing attack, a computer DEV can show a screenful with a warning that the e-mail or website is likely to be a phishing attack. In various embodiments, the Computer DEV can also deactivate the links in the e-mail or webpage. Likewise, a computer 400 may display a warning for a security analyst.

As illustrated in Figure 3, in various embodiments, the computer can use, in a step 1002, one or more lists, for example a whitelist WL, i.e., a list that comprises data from authorized sources, and optionally a blacklist BL, i.e., a list that comprises data of malicious sources. In particular, in this case the computer compares in step 1002 the source data SRC with the list or lists to determine whether one or more of the source data SRC, such as the e-mail address of the sender of the e-mail or the data of the corresponding SMTP server, the URL of a webpage or the corresponding data of the web server, or a domain name of the e-mail address or of the webpage, are comprised in the list or lists. Next, the computer checks, in a verification step 1004, whether the data are comprised in the list or lists, and the computer proceeds to step 1006 only when the data are not comprised in the list or lists (output "N" from the verification step 1004). Instead, in the case where the data are comprised in a whitelist WL (output "Y" from the verification step 1004), the computer proceeds to the end step 1018. Finally, in the case where the data are comprised in a blacklist BL, the computer proceeds to the end step 1016 (and then to step 1018). Consequently, in various embodiments, once the method has been started, the respective content of the e-mail or webpage is classified as authentic by default, and the content is possibly classified in step 1016 as phishing attack. However, there could be envisaged also an additional step in which the content is classified as authentic when:
- the respective source data SRC are comprised in the whitelist WL (output "WL" from step 1004); and/or
- no protected logo has been found (output "N" from step 1010); and/or
- a logo has been detected, but the list DL indicates the fact that the source SRC is authorized to use the logo (output "Y" from step 1014).

Consequently, in various embodiments, the computer does not perform phishing detection when the source data SRC are comprised in one of the lists WL or BL. The operation of filtering via the list WL and/or the list BL hence helps to avoids useless operations, thus reducing the times and costs of the complex detection of logos. In this context, by already including in a whitelist WL all the authorized sources of the list DL, steps 1012 and 1014 may be omitted because, when step 1008 identifies a main logo LOGO, this logo intrinsically corresponds to a non-authorized logo; i.e., when step 1010 determines that a main logo LOGO has been detected (output "Y" from step 1010), the computer can proceed directly to step 1016, and then terminate in step 1018. Obviously, in this case the computer is no longer able to verify specifically the authorized sources for a given logo LOGO.

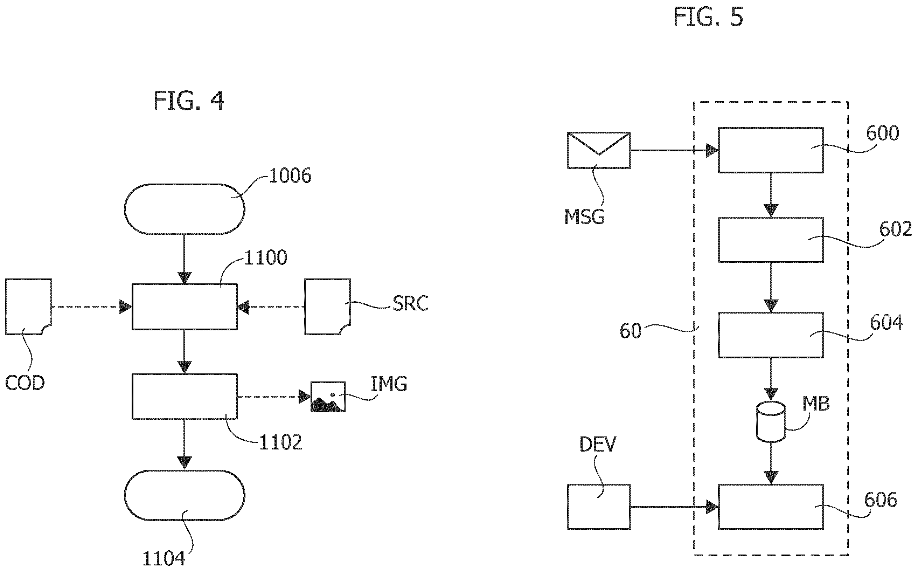

Figure 4 shows an embodiment of step 1006. In particular, in the embodiment considered, the computer receives, in a step 1100, the (source) code COD of the e-mail or webpage, and the corresponding source data SRC. Moreover, once the code COD of the e-mail or of the webpages is obtained, the computer generates the image IMG via a rendering of the code COD. The code COD of an e-mail or of a webpage is typically in HTML (HyperText Markup Language) code, and the solutions for carrying out a graphic rendering of this HTML code are commonly known.

For instance, with reference to step 1100, a device DEV can analyse the HTTP and/or HTTPS traffic received by the device DEV to extract the code of a webpage and the corresponding source data SRC. Consequently, the solution may be implemented in a browser. In this context, the majority of modern browsers make it possible to integrate extensions, i.e., software that can modify operation of the browser. Consequently, in various embodiments, the step 1100 is implemented via an extension for a browser, such as Google Chrome^{®} or Microsoft Edge^{®}. Likewise, a device DEV can analyse the code of an e-mail and the corresponding source data SRC, received by the device DEV, via the use of the protocols POP (Post Office Protocol), in particular its version 3 (POP3), and/or IMAP (Internet Message Access Protocol). For instance, in various embodiments, step 1100 is implemented via an extension, or add-in, for an e-mail program, such as Microsoft Outlook^{®} or Mozilla Thunderbird^{®}.

Instead, a platform of an SNMP type monitors the traffic exchanged over a network. Consequently, a computer 400 of the SNMP 40 can receive data packets from one or more data-traffic sensors. For instance, as explained previously, these data packets may be supplied by a SPAN port 402 of a switch 100, a router and/or firewall 20, a TAP 404, etc. Consequently, by analysing the responses contained in the data packets, the computer 400 can determine the code COD of the e-mail or webpage, and the corresponding source data SRC. With reference to webpages, the computer 400 can also detect HTTP requests, which already comprise a request to obtain a given webpage associated to a corresponding URL. Consequently, in this case the computer 400 can autonomously download the code COD of the webpage associated to the URL and use the URL as source data SRC.

Alternatively, the method of Figure 3 may be implemented in a server configured to forward an e-mail or a webpage to a device DEV in the LAN 10. For instance, in the case of a webpage, the server (for example, SRVL, SRVDMZ or SRVR), may be a web proxy. In fact, such a proxy server is configured for receiving an HTTP or HTTPS request from a device DEV and forwarding this request to the WAN 30 (or LAN 10). In response to the request, the proxy server receives the respective webpage and forwards the webpage received to the device DEV that has sent the request. Consequently, a proxy server is able to obtain the source data SRC (for example, on the basis of the initial request or on the basis of the response received) and the code COD of the webpage (received in response to the request sent). Consequently, in various embodiments, step 1100 is implemented in a web proxy server.

Likewise, in the case of an e-mail, the server (for example SRVL, SRVDMZ or SRVR) may be an e-mail proxy that forwards requests (and responses), for example in accordance with the protocol POP3 or IMAP. Consequently, in various embodiments, step 1100 is implemented in an e-mail proxy server. Alternatively, the server may be an e-mail server (for example, SRVL, SRVDMZ or SRVR) that receives an e-mail, for example by means of the protocol SMTP, from another server, where the content of the e-mail comprises the source data SRC and the respective code COD of the e-mail. Consequently, in various embodiments, step 1100 is implemented in a mail server. In general, implementation of step 1100 in a mail server may be obtained via a modification of the code of the mail server or by intercepting the flow of the mail server.

For instance, Figure 5 shows a typical mail server 60. In particular, the mail server 60 comprises a mail-receiving service 600 configured to receive e-mails MSG. For instance, typically the service 600 implements the protocol SMTP and optionally other functions to verify authorization of the sender server to send e-mails MSG for a given domain. Typically, this service 600 does not analyse the content of the e-mail MSG. The mail-receiving service 600 then forwards an e-mail received to a transport service 602 configured to analyse the content of the e-mail MSG and categorizing the e-mail. For instance, the transport service 602 can apply filtering rules, spam classification, etc. An e-mail that is not rejected by the transport service 602 is then forwarded to a delivery service 604, which may be active on the same server or on a further server. In particular, the delivery service 604 is configured to save the e-mail in a mail box MB. As is known, a mail server 60 further comprises a management service 606 that will enable a device DEV to access the mail box MB in order to obtain the content of the e-mail, for example via the protocol POP3 or IMAP.

Consequently, in various embodiments, step 1100 may be implemented in the transport service 602 in so far as this component has access to the content of the e-mail message MSG and can consequently carry out an analysis of the message.

For instance, Microsoft Exchange^{®} is a company e-mail service based upon a Microsoft Exchange Server^{®}. In this context, Microsoft allows the transport service 602 to be configured for communication with software of third parties, then making possible interaction with an additional software capable of obtaining the code COD and the data SRC of an e-mail. Other providers frequently do not offer a similar possibility. However, in these cases, it is possible to configure, in modalities already known, forwarding rules, whereby a flow of e-mail traffic is forwarded through a further mail server. For instance, by configuring the so-called "MX record" of a domain, it is possible to specify a new mail server. Consequently, by configuring the above record, an e-mail could be sent to a mail server that carries out extraction of the data COD and SRC, and subsequently the first mail server analyses these data and, in the absence of a phishing attack, forwards the e-mail to a second mail server that manages the mail boxes MB. For instance, access to the first e-mail server could be provided as a service.

Consequently, in various embodiments, a computer, such as a computer DEV, a server SRVL, SRVDMZ or SRVR (e.g., a mail server, a web proxy or an e-mail proxy), or a computer 400 of an SNMP 40, can obtain, in step 1100, the data COD and SRC. Next, the computer itself can generate, in step 1102, a rendering of the image IMG, and the respective computer can also carry out the other steps of the method illustrated in Figure 3.

Alternatively, one or more of the steps of the method of Figure 3 may be implemented with a further computer configured for receiving:
- the source data SRC and the image IMG;
- the source data SRC and the code COD, as well as the server generating the image IMG for the code COD; or
- in the case of a webpage, the source data SRC, in particular an URL, where the server downloads the code COD associated to the URL and generates the image IMG for the code COD.

For instance, in various embodiments, a first computer, such as a computer DEV, a server SRVL, SRVDMZ or SRVR (e.g., a mail server, a web proxy, or an e-mail proxy), or a computer 400 of an SNMP 40, can obtain, in step 1100, the data COD and SRC, and optionally, via step 1102, the corresponding rendering of the image IMG, and send the respective data to a second computer, such as a server SRVL, SRVDMZ or SRVR, configured for implementing the steps illustrated in Figure 3. As mentioned previously, the first computer could also send just an URL, and the second computer could download the code COD associated to the URL and generate the image IMG for the code COD via steps 1100 and 1102.

In this case, the second computer then returns, in step 1018, data that indicate whether it is a phishing attack or not. Consequently, in various embodiments, the operation of phishing detection may be provided as a service that is executed by a remote server SRVR (i.e., the second computer), where the verification requests may be sent by a device DEV or 40, or a server SRVL, SRVDMZ, SRVDMZ or SRVR. For instance, in response to identifying a phishing attack, a computer DEV or the computer 400 may display a screenful with a warning that the e-mail or website is probably a phishing attack. Instead, a web proxy or a mail server/proxy, may block forwarding of the webpage or of the e-mail, respectively

In various embodiments, a computer that has access to the code COD, such as the computer that carries out, in step 1102, rendering of the page, can also analyse the code COD of the e-mail or webpage to detect links (HTTP or HTTPS links) that are comprised in the code COD. In this case, once a link has been detected, the computer can send an HTTP or HTTPS request (on the basis of the type of the link), to obtain the code COD of the respective webpage. Consequently, in various embodiments, the method of Figure 3 is repeated for these additional links. For instance, in this way, the computer can verify an e-mail or an initial webpage, and then verify also the webpages associated to the links that are comprised in the e-mail or initial webpage.

As explained previously, in various embodiments, a computer carries out, in step 1102, rendering of an HTML page. For instance, in various embodiments, the computer is configured for generating rendering of the page using Google Chrome^{®}. For instance, in various embodiments, the computer uses the API made available by Selenium, for example Selenium 3, via a Python wrapper to interact with the browser Google Chrome. In general, Google Chrome may be used for generating a rendering IMG of the code COD of an e-mail or webpage (for example, storing the corresponding content in a file), or directly of the URL of a webpage. This solution makes it possible to obtain a reliable rendering of the e-mail or webpage that corresponds to the content that is presumably displayed to the user. For instance, this solution prevents the manager of a fake site from possibly implementing solutions that will supply a different code on the basis of the metadata that identify the browser that has sent the request. In particular, with reference to obtaining and rendering a webpage identified via an URL, the computer can interact with the browser, for example via Selenium, in particular to prevent two obfuscation techniques: the splash screens and the cookie banners. These elements are present in many legitimate sites and at times also appear in the phishing pages to cover partially or completely the page and prevent detection by phishing-detection systems.

Consequently, in the embodiment considered, step 1008 receives an image IMG and is configured to detect in the image IMG logos of a set of protected logos. In the case where step 1008 identifies a number of protected logos, it selects a main logo LOGO. Consequently, step 1008 returns data that indicate that no logo has been found or data that identify a main logo LOGO. For instance, in various embodiments, step 1008 returns a variable *b,* the value of which indicates the main logo LOGO selected by the set of protected logos. For instance, in various embodiments, the variable *b* is a numerical or enumeration variable. For instance, in this case, the value 0 can indicate that no logo has been found, the value 1 can indicate the first logo, etc. Alternatively, the variable *b* may be a string that comprises directly a name associated to the main logo LOGO identified. As will be described hereinafter, in various embodiments, step 1008 can also determine a variable *p* that indicates a confidence level of the estimate of detection of the logo LOGO.

Consequently, in the case where the variable *b* indicates that a protected logo has been found, the computer can compare the source data SRC with the list DL that comprises the corresponding authorized sources for each protected logo and classify the e-mail or webpage as authentic or fake. For instance, in various embodiments, step 1012 returns a variable *r* that may be set at a first logic value, for example "1", when the source SRC is not comprised in the list DL for the logo LOGO, which indicates a probable phishing attack, and a second logic value, for example "0", when the source SRC is comprised in the list DL for the logo LOGO; i.e., the use of the logo is authorized. Likewise, the variable *r* may be set at the first logic value (e.g., "1") when the source SRC is comprised in a blacklist BL. Instead, the variable *r* may be set at the second logic value (e.g., "0") when the source SRC is comprised in a whitelist WL. Finally, when a main logo LOGO has not been detected, the variable *r* may be set at the second logic value (e.g., "0"), or a dedicated value may be used.

In the case where steps 1012 and 1014 are omitted, the variable r may be set initially at the second logic value (e.g., "0"), and step 1008 can set the variable r at the first logic value (e.g., "1") when a main protected logo LOGO has been detected.

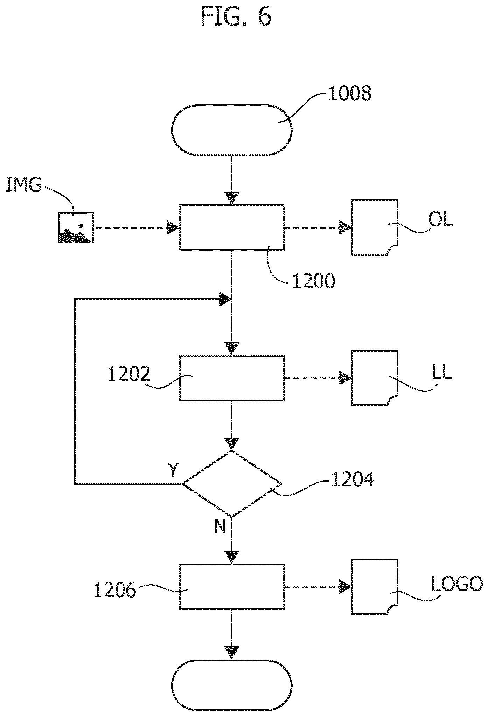

With reference to Figure 6, a possible embodiment of step 1008 will now be described. As explained previously, step 1008 may be implemented via software code executed by a computer, for example a computer DEV, a computer 400 of an SNMP 40, and/or a server, such as a local server SRVL and/or a remote server SRVR, and/or a remote server SRVDMZ.

In general, in a step 1200, the computer processes the image IMG with an object-detection algorithm to generate a list of objects OL that are present in the image IMG.

In general, various software solutions are known for detecting objects in images. For instance, the most widely known solutions are Single Shot Multibox Detector (SSD), Faster-RCNN, RetinaNet, FCOS, and YOLO, for example YOLOv5. By conducting various empirical tests for detection of logos in images, the inventors have noted that, among these solutions, YOLO has provided the best results in terms of mAP (mean Average Precision), training time, and forecast time. Consequently, in various embodiments, the computer uses, in step 1200, a version of YOLO, for example YOLOv5, YOLOv7, or subsequent versions. In particular, YOLO is a software solution that makes it possible to identify objects in a given image.

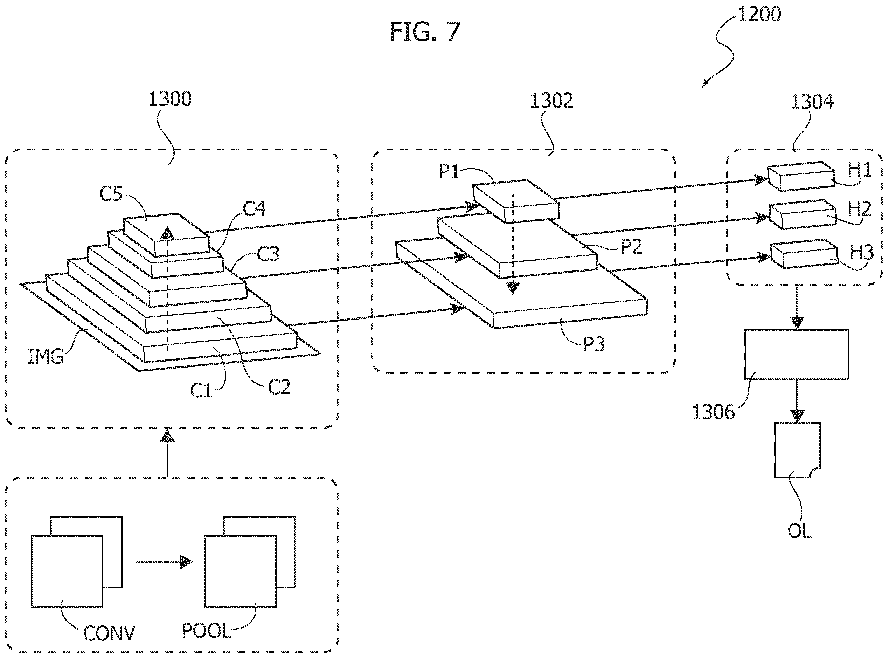

Figure 7 shows an embodiment of a classifier used in step 1200. In particular, the classifier comprises a so-called backbone 1300. In general, the term "backbone" relates to a feature-extraction network, i.e., a so-called feature extractor, configured to extract from input data a set of representative features. In particular, in the context of object-detection solutions, the backbone typically comprises a CNN (Convolutional Neural Network) that receives at input the image IMG.

As schematically illustrated in Figure 7, the CNN comprises an input layer corresponding to the data of the pixels of the image IMG. Since the number of inputs of a CNN is fixed, the rendering IMG can also be transformed, for example via a re-sizing and/or cropping operation so that the size of the image IMG will correspond to the number of inputs of the CNN.

As usual for CNNs, the input layer is followed by one or more convolutional layers CONV, which execute a parameterized convolutional operation of the data of the pixels received at input. In particular, as compared to a traditional ANN (Artificial Neural Network), the convolutional layers receive locally connected features, such as a series of pixels, for example 3×3, 5×5, 7×7, etc. Basically, such convolutional layers CONV operate as extractors of graphic features. In various embodiments, a convolutional layer CONV comprises, or is followed by, a respective layer ReLu, which applies an activation function to the values calculated by the convolutional layer, for example to set to zero the negative values.

In general, each convolutional layer CONV does not necessarily comprise a single convolutional-filter layer, but the convolutional layer CONV may comprise a plurality of convolutional-filter instances, which supply at output a so-called volume having a given depth (as schematically illustrated in Figure 7).

In various embodiments, one or more of the convolutional layers CNN is followed by a pooling layer POOL, which executes a down-sampling, i.e., an operation of reduction of resolution. In this way, the size of the space of the features is reduced in a sequential way.

For instance, some backbone topologies are described in the article by Elharrouss, Omar, *et al. "Backbones-Review: Feature Extraction Networks for Deep Learning and Deep Reinforcement Learning Approaches*", ArXiv, abs/2206.08016 (2022), DOI: https://doi.org/10.48550/arXiv.2206.08016, the contents of which are incorporated herein for reference. For instance, various versions of YOLO use a backbone DarkNet-53 or CSPDarknet53. However, also other backbones, such as CSPResNeXt-50 or EfficientNet-B0, may be used. Consequently, in various embodiments, the backbone 1300 comprises a CNN configured to generate different levels of features, so-called backbone levels, which correspond to the data between the various layers (of various sizes) of the CNN. Consequently, each backbone level, for example the levels C1, C2, C3 C4 and C5, comprises a feature map having a certain size, where each cell typically comprises a feature vector.

The various feature levels extracted via the backbone 1300 are then supplied to a so-called detection neck 1302 configured to aggregate the features of different backbone levels. For instance, in various embodiments, an FPN (Feature-Pyramid Network) is used, configured to generatE a pyramid of aggregated features, where each level of the pyramid has a different number of aggregated features, i.e., a different resolution.

For instance, typically each level of aggregated features is generated as a function of the features of the respective backbone level and of the aggregated features of an adjacent level of the pyramid, typically a level with a lower resolution. For instance, in various embodiments, the backbone 1300 is configured to generate five levels of features C1, C2, C3, C4 and C5, with decreasing resolution, and the neck 1302 can generate three levels of aggregated features P1, P2, P3. For instance, in this case, the aggregated features of a first level P1 (with lower resolution) may be generated as a function of the features C1, for example by means of one or more further convolutional layers. Instead, the aggregated features of a second level P2 may be generated as a function of the features C2 and of the aggregated features P1. For instance, for this purpose, an up-scaling operation may be envisaged, i.e., an operation of increase in resolution of the aggregated features P1 so that the number of the scaled features P1' will correspond to the number of features C2. Likewise, the aggregated features of a third level P3 may be generated as a function of the features C3 and of the aggregated features P2. Also in this case, an operation of increase in resolution of the aggregated features P2 may be envisaged so that the number of the scaled features P2' will correspond to the number of features C3.

In general, instead of using an FPN, other algorithms may be used for the detection neck. Moreover, in the simplest case, the aggregated features of the various levels of the feature pyramid, for example the levels P1, P2 and P3, may directly correspond to the features of a respective level of the backbone, for example the levels C1, C2, and C3.

The above models of backbone (feature extractor) and neck (feature aggregator) are well known in the context of object-detection algorithms. For instance, we may cite the article by Sara Bouraya, *et al.,* "*Deep Learning based Neck Models for Object Detection: A Review and a Benchmarking Study",* International Journal of Advanced Computer Science and Applications (IJACSA), 12(11), 2021, http://dx.doi.org/10.14569/IJACSA.2021.0121119, which shows that the backbone 1300 may be implemented with one of the following specific CNNs: VGG, Overfeat, GoogleNet, ResNet50, ResNet101, ResNeXt50, InceptionResNet v1, InceptionResNet v2, Inception v4, EfficientNet, SENet, CSPDarknet53, MobileNet, MobileNetV2, DenseNet201, SpineNet, CSPResNeXT, CSPNet, Hourglass AlexNet, Datknet, Inception v2, Inception v3, MPN, DPN, DCN, DetNet, Xception, ZFNet, VGGNet16, GoogLeNet, YOLONet, DenseNet, IF ResNet50, PVANet, IF ResNet, PolyNet, PeleeNet, NoisyStudent EfficientNet-L2, Meta Pseudo Labels. Instead, the neck 1302 may be implemented with one of the following aggregators: FPN, PAN, NAS-FPN, BI-FPN, PANet, BFP, YOLO-FPN, such as FF, SFAM, RFB, Fully connected FPN, RPN, SPP, such as PP, SAM, PAN, EFM, MLFPN, PA FPN. As mentioned, these solutions are well known in the literature, which renders any detailed description superfluous.

Consequently, the aggregation algorithm 1302 supplies a pyramid of aggregated features, in which each level of the pyramid has a different resolution. In various embodiments, the feature pyramid is then supplied to a classifier 1304. For instance, the classifier changes between the various versions of YOLO. The solutions have in common that the aggregated features of each level of the pyramid are supplied to a respective classifier, the so-called head H, for example classifiers H1, H2, and H3.

Basically, each classifier H is configured to receive the respective aggregated features and supply data that identify one or more objects as a function of the respective aggregated features received.

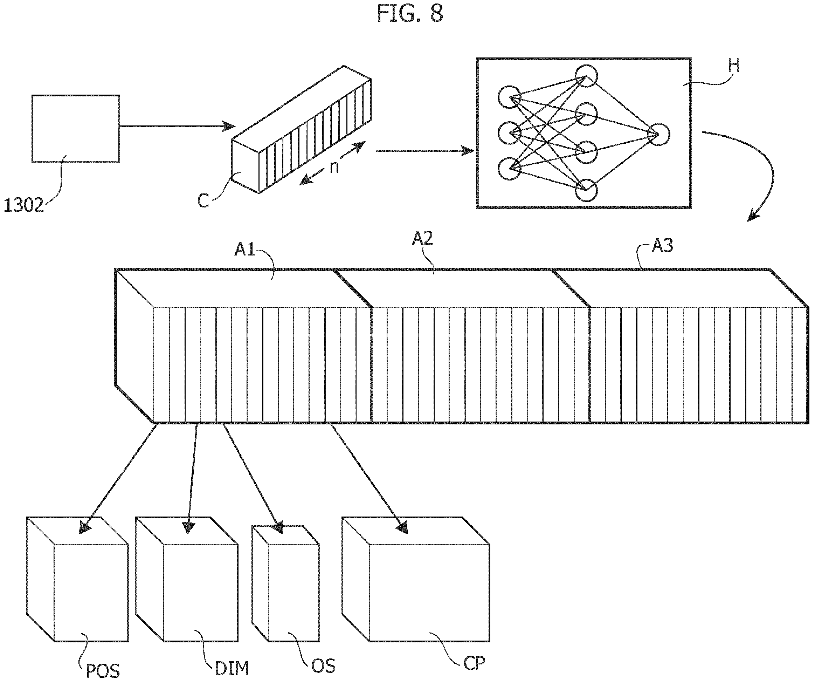

For instance, as illustrated in Figure 8, in various embodiments, a classifier supplies at output:
- data POS identifying the position of the object;
- data DIM identifying the size of the object;
- data OS indicating a probability that an object has been detected; and
- data CP identifying the class of the object detected.

As will be described in greater detail hereinafter, detection of the position POS and size DIM of the object may also be omitted. In fact, in various embodiments, the classifier H can detect only the presence of objects; i.e., detection of their position and/or size, at least in the classification step, is purely optional.

For instance, in YOLO, each level of the feature pyramid corresponds to a given feature map, which has a certain height *h* and width w, for example 13×13 for level P1, 26×26 for level P2, and 52×52 for level P3, where each point is associated to a respective area in the image IMG. In particular, as illustrated in Figure 8, each point or cell C of the aggregated-feature map comprises a vector of *n* aggregated features; i.e., each level of aggregated features comprises *h*×*w*×*n* aggregated features.

In particular, in various embodiments, each classifier H is configured to detecte a certain number k of object classes. In this case, the data CP may comprise, for each of the k classes, a respective probability; i.e., the data CP may correspond to the probabilities of the various classes. Consequently, in various embodiments, each classifier H is configured to receive the n aggregated features of a given cell C of the aggregated-feature map, and supply at output data that comprise k values of probability, one for each class. In this case, the datum OS may be even omitted. In particular, in various embodiments, for example in the case of YOLO, the datum OS indicates the probability that a given cell C comprises an object, and the data CP indicate for each object class i a respective relative probability CP*ᵢ*; i.e., the probability that a given cell C comprises an object of a given class i corresponds to *p(i)* = OS · CP*ᵢ*. Consequently, instead of returning the values OS and CP, the classifier could supply as result for each class the respective probability *p(i).*

In various embodiments, each classifier H can also supply at output data POS identifying a relative position of the object with respect to the point of the map and data DIM identifying a relative dimension of the object, i.e., the data POS and DIM that comprise four values identifying a so-called bounding box.

Consequently, the classifier H is configured to receive n aggregated features and supply at output a plurality of values, i.e., at least the k values of probability (OS and CP*ᵢ*, or *p*(*i*)). The classifier H can thus be implemented with one or more classification algorithms, such as an ANN, a CNN or an SVM (Support-Vector Machine).

In various embodiments, for example in the case of YOLO, the classifier H uses the so-called anchor boxes. In this case, each classifier H comprises indeed a number *m* of classifiers, where each classifier is configured to estimate whether the so-called anchor box of a given pre-set size comprises an object, where each of the *m* classifiers uses an anchor box of a different size, thus enabling detection of objects having different shapes.

For instance, in Figure 8 the classifier H supplies at output the estimate of a respective object for each anchor box, for example A1, A2, and A3. As mentioned previously, said estimate is supplied for each cell C of each feature map, for example 13×13 = 169 results for level P1, where each result comprises the estimates for each anchor box, for example three estimates. The use of these anchor boxes, at least in the classification step, could be optional, for example because the classifier might even not detect the position and/or size of the objects.

Consequently, step 1304 supplies a very large number of data, where the same object may be identified in a number of levels of the pyramid (P1, P2, P3) and/or for a number of cells C, and optionally in a number of anchor boxes. In this context, the inventors have noted that the main logo typically has a sufficiently large size as not to require the use of the deepest levels of the feature pyramid. For instance, for this reason, the feature aggregator 1302 can even supply just one level P1, or possibly two levels P1 and P2, where the level P1 has a lower resolution. Moreover, in various embodiments, all the aggregated-feature maps supplied by the feature aggregator 1302 have a size that is less than a maximum size, for example, less than 50×50 aggregated features - i.e., the height *h* is less than 50 and the width w is less than 50 -, which considerably reduces the complexity of calculation as compared to a standard implementation of YOLO.

In various embodiments, the computer can then process, in a step 1306, the results supplied by the classifier 1304 to generate the object list OL. For instance, the computer may remove, in step 1306, the results that have a value OS that is too low, apply a so-called non-maximum suppression, convert the data POS and DIM into respective absolute data, etc. The various details of object-detection algorithms are well known. For instance, the previous steps and the differences between the various versions of YOLO are described in greater detail in Chapter "4. *Object Detection"* of the Deep Learning Bible, available at the link https://wikidocs.net/book/7721. In general, a complex filtering in step 1306 is purely optional, since it is sufficient for step 1306 to be able to supply a list of objects that comprises data indicating a respective class and a respective probability that an object of that class is in the image IMG; i.e., the object list OL may correspond to the results supplied by the classifier 1304, i.e., the data OS and CP*ᵢ*, or directly *p(i),* possibly filtered to select for each cell C only the class with the highest probability and remove all the results such that the probability of the selected class is less than a given threshold.

Consequently, in various embodiments, the classifier 1200 returns a list OL of objects detected in the image IMG. As mentioned previously, the classifier 1304 may even not detect the (relative) position and/or size of the objects. Consequently, in various embodiments, the list OL comprises, for each object:
- data identifying the class *b* of the object; i.e., the class *b* indicates one of the k classes;
- data identifying the confidence of the estimate/detection p; and
- optionally, the position and size of the object, for example identified via a bounding box that comprises data identifying a top left-hand corner (x1, y1) and a bottom right-hand corner (x2, y2).

Consequently, by training the classifier 1200 with a single class, i.e., *k =* 1, that comprises all the protected logos, the classifier 1200 is able to identify the position and size of the logos in the image IMG. Consequently, by selecting only the main logo LOGO of the page, a second classification algorithm can compare the pixels within the bounding box of the main logo with the protected logos to determine whether the main logo corresponds to any one of the protected logos. In general, training of these object detectors is well known in the prior art. For instance, typically a training algorithm changes the values of the various parameters of the feature extractor 1300, of the feature aggregator 1302, and of the classifier 1304 in such a way as to reduce the estimation error with respect to a training dataset, which in this case comprises reference images, i.e., the protected logos.

However, the inventors have noted that by training the classifier 1200 with a respective class for each logo, the precision of identification of the logos increases and the computation time is reduced. As mentioned previously, the speed of the classifier 1200 may be increased using only low-resolution aggregated-feature maps (e.g., P1, P2, P3), omitting the estimation of the data POS and DIM, at least in the classification step, and/or omitting operations in block 1306 for combining the results of the classifier to identify larger objects. Instead, using a second classification algorithm that analyses the pixels within the bounding box, it is essential for the classifier 1304 to supply the data POS and DIM and process these data in step 1306 to obtain the bounding box of larger objects.

In particular, by training the classifier 1200 with a respective object class for each logo, the classifier 1200 returns a list OL of objects identified that comprises the class *b* of the object, i.e., the logo, the confidence of the estimate *p,* and optionally the bounding box.

In this context, the inventors have noted that the confidence p obtained by the object-detection model may be used directly for the classification. In particular, maintaining only the objects that have a confidence p higher than a given threshold *t,* with *t* ∈ [0,1], each remaining object has a high probability that it corresponds to a protected logo.

For instance, this is schematically illustrated in Figure 6, where the computer selects, in a step 1202, an element of the list OL and maintains the element only when the probability *p* of the object is higher than the threshold *t.* Next, the computer checks, in a verification step 1204, whether other elements of the list OL are present. If so (output "Y" from the verification step 1204), the computer returns to step 1202 to verify the possible presence of another object. Otherwise, the computer proceeds to a step 1206. Consequently, in various embodiments, the computer is configured to generate a list of logos LL that comprises only the objects of the list OL that have a respective probability *p* higher than *t.*

In particular, in step 1200, the computer selects a main logo LOGO from among the objects of the list LL. For instance, in various embodiments, the computer selects, in step 1200, the logo of the list LL that has the highest probability *p.* In various embodiments, the computer can take into consideration also further criteria for selecting the main logo LOGO, such as the size of the bounding box and the position of the bounding box (when these data are available). For instance, the computer could neglect the logos of the list LL that have:
- a size (as indicated by the bounding box) that is less than a given threshold, and/or
- a position (as indicated by the bounding box) that is higher than a given threshold.

Consequently, in the embodiment considered, the computer is configured to:
- select the object *b_{M}* of the list OL that has the highest probability *p*;
- determine whether the probability *p_{M}* of the object selected *b_{M}* is higher than the threshold *t*; and
- use the selected object *b_{M}* as main protected logo LOGO when the probability *p_{M}* of the selected object *b_{M}* is higher than the threshold *t.*

Instead, in the case where the probability *p_{M}* of the selected object *b_{M}* is lower than the threshold *t*, the computer does not select any main protected logo LOGO.

In this context, in the case where step 1306 is omitted, step 1206 may directly analyse the probability *p(i)* (received by the classifier 1304 or calculated as a function of the data CP and OP) to identify a main logo LOGO. For instance, for this purpose, the computer may:
- select the object class that has the highest probability *p*(*i*);
- determine whether the probability *p(i)* of the selected class is higher than the threshold *t*; and
- use the selected object class as main protected logo LOGO when the probability *p(i)* of the selected class is higher than the threshold *t.*

Instead, in the case where the probability of the selected class is less than the threshold *t*, the computer does not select any main protected logo LOGO.

As explained before, in various embodiments, the classifier 1200 can omit the combination of the results of different cells and levels, and optionally the bounding box in step 1306. Moreover, in various embodiments, the classifier 1304 may even not supply the position data POS and size data DIM. In particular, in various embodiments, the classifier 1200 is configured to omit these operations, i.e., inhibit their execution, only during the classification step, i.e., during the normal operation described previously. Instead, in various embodiments, these operations are executed during the step of training the classifier 1200. In particular, in various embodiments, during the training step, the computer obtains a training dataset that comprises images IMG with different reference logos, i.e., the protected logos, in which a plurality of images IMG comprises the logo itself in different positions and of different sizes. Moreover, the training dataset comprises, for each image IMG, data indicating the identity of the logo (i.e., the object class) and the position and size of the logo in the respective image IMG. Consequently, during the training step, the classifier 1304 is configured to receive also the data POS and DIM, and the post-processing module 1306 generates the object list OL by combining the various results obtained for the cells and levels, and optionally also the bounding box. Consequently, during the training step, the object classifier 1200 supplies a list OL that comprises objects that have been detected, where each object is identified via an estimate of the respective class, position, and size. Consequently, the training algorithm can (iteratively) modify the values of the various parameters of the classifier 1200 in such a way as to reduce/minimize the error between the reference data, i.e., the data stored in the training dataset (type of logo, position, and size), and the data supplied by the object classifier 1200 (estimation of the object class, of the position, and of the size).

In this context, the person skilled in the art will appreciate that it is possible to find backbones 1300 and necks 1302 that are already trained for classification of objects; i.e., these blocks may be pre-trained for identifying objects in images. Consequently, in this case, the structures and the values of parameters of the blocks 1300 and 1302 are constant, and the training algorithm can modify only the values of parameters of the classifier 1304, in particular the values of the parameters of the classifiers H. For instance, in this case, it is sufficient to re-train the classifier 1304 to take into consideration new logos, i.e., new object classes.

Consequently, once the computer has trained the object classifier 1200, in particular the classifier 1304, the computer can avoid, in step 1306, identification of the same object in different cells and levels, and optionally the bounding box, and preferably omit calculation of the data POS and DIM.

In general, training may be carried out also via a further computer that supplies to the computer that implements step 1200 the values of the parameters of the object classifier, optionally only the values that are useful for calculation of the data CP and OS (or alternatively *p*(*i*)), omitting the values for calculation of the position POS and of the size DIM.

Of course, without prejudice to the underlying principles of the invention, the details of construction and the embodiments may vary widely with respect to what has been described and illustrated herein purely by way of example, without thereby departing from the scope of the present invention, as this is defined in the ensuing claims.

## Claims

1. A method for detecting phishing attacks, comprising:
- receiving (1100) a source code (COD) of a web page or email, and respective source data (SRC) identifying a sender of the web page or email, respectively;
- determining (1002) whether said source data (SRC) are included in a first list (WL), wherein said first list (WL) includes data of authorized sources;
- in response to a determination that said source data (SRC) are included in said first list (WL), classify said web page or said email as legitimate;
- in response to a determination that said source data (SRC) are not included in said first list (WL):
- generating (1006, 1102) an image (IMG) that corresponds to a rendering of said source code (COD);
- determining (1008) via an object classifier (1200) a list of objects (OL) in said image (IMG), wherein said object classifier (1200) comprises:
- a feature extractor (1300) comprising a convolutional neural network configured to receive said image (IMG) and provide in output a plurality of feature maps (C1, C2, C3, C4, C5) with different sizes, wherein each cell of the feature map (C1, C2, C3, C4, C5) comprises a vector of features,
- a feature aggregator (1302) configured to generate one or more aggregated feature maps (P1, P2, P3) with different sizes as a function of said feature maps (C1, C2, C3, C4, C5), wherein each cell (C) of a respective aggregated feature map (P1, P2, P3) comprises a vector of aggregated features (n),
- a classifier (1304) configured to estimate the presence of an object in each cell (C) of each aggregated feature map (P1, P2, P3) as a function of the respective aggregated feature vector (n), wherein said classifier (1304) is configured to identify a plurality of object classes and provide for each cell (C) and each object class respective data (OS, CP) indicating the probability that the respective cell (C) includes an object that belongs to the respective object class, wherein said classifier is trained to detect a plurality of reference logos, wherein each object class corresponds to a respective reference logo;
- analyzing (1206, 1306) said probabilities (OS, CP) to verify whether said image (IMG) includes a main reference logo (LOGO) via the steps of:
- selecting the object class that has the highest probability (CP, OS),
- determining whether the probability of the selected class is greater than a threshold,
- in response to a determination that the probability of the selected class is greater than said threshold, selecting the selected object class as the main reference logo (LOGO), and
- in response to a determination that the probability of the selected class is not greater than said threshold, select no main reference logo (LOGO);
- in response to said selecting no main reference logo (LOGO), classifying said web page or said email as legitimate; and
- in response to said selecting the selected object class as main reference logo (LOGO), classifying (1016) said web page or said email as phishing attack.

2. The method according to Claim 1, comprising:
- determining (1002) whether said source data (SRC) are included in a second list (BL), wherein said second list (BL) includes data of malicious sources; and
- in response to determining that said source data (SRC) are included in said second list (BL), classifying (1016) said web page or said email as a phishing attack.

3. The method according to Claim 1 or Claim 2, comprising:
- in response to said selecting the selected object class as main reference logo (LOGO), determining (1012) whether said source data (SRC) are included in a third list (DL), wherein said third list (DL) includes for said selected object class authorized source data;
- in response to a determination that said source data (SRC) are included in said third list (DL), classifying said web page or said email as legitimate; and
- in response to a determination that said source data (SRC) are not included in said third list (DL), classifying (1016) said web page or said email as a phishing attack.

4. The method according to any of the previous claims, wherein said receiving (1100) said source code (COD) and said source data (SRC) comprises:
- receiving (1100) said source code (COD) and said source data (SRC) of a web page via the HTTP protocol; and/or
- receiving (1100) said source code (COD) and said source data (SRC) of an email via the POP3, IMAP or SMTP protocol.

5. The method according to any of the previous claims, wherein said receiving (1100) said source code (COD) and said source data (SRC) comprises:
- intercepting (1100) an HTTP communication and extracting said source code (COD) and said source data (SRC) of a web page from said HTTP communication; and/or
- intercepting (1100; 600) a POP3, IMAP or SMTP communication and extracting said source code (COD) and said source data (SRC) of an email from said POP3, IMAP or SMTP communication.

6. The method according to any of the previous claims, wherein said classifier (1304) is implemented with YOLOv5 or YOLOv7.

7. The method according to any of the previous claims, wherein said classifier (1304) comprises:
- for each aggregated feature map (P1, P2, P3) a respective sub-classifier (H, H1, H2, H3) configured to receive the aggregated feature vector (*n*) of a cell (C) of the respective aggregated feature map (P1, P2, P3) and provide in output for each object class respective data (OS, CP) indicating a respective probability that the cell (C) comprises an object belonging to the respective object class.

8. The method according to Claim 7, wherein said sub-classifier (H) is configured to provide data (POS) indicating a relative position of an object with respect to the respective cell (C), and data (DIM) indicating a relative size of an object with respect to the respective cell (C).

9. The method according to Claim 8, wherein said object classifier (1200) comprises:
- a post-processing module (1306) configured to generate an object list (OL) by analyzing the data provided by said classifier (1306) to identify objects in said image (IMG), wherein said post-processing module (1306) is configured to apply a *non-maximum suppression* to the data provided by said classifier (1304), wherein said object list (OL) comprises for each detected object:
- data identifying an object class selected from said object classes;
- data identifying the confidence of the estimate that said image (IMG) comprises the respective object; and
- optionally data indicating the position and size of the object in said image (IMG).

10. The method according to any one of the previous Claims 7 to 9, wherein said sub-classifier (H) is configured to provide said data (POS) indicating a relative position of an object with respect to the respective cell (C) and said data (DIM) indicating a relative size of an object with respect to the respective cell (C) only during a training phase.

11. The method according to any of the preceding claims, wherein the height and width of each aggregated feature map (P1, P2, P3) is smaller than 50.

12. The method according to any of the preceding claims, comprising:
- analyzing said source code (COD) of a web page or email to detect links, and repeating the following steps for each detected link:
- requesting the source code (COD) for the respective link, and
- repeating the steps of Claim 1 for each requested source code (COD).

13. A system comprising at least one computer (DEV, 400, SRVL, SRVDMZ, SRVR) configured to implement the method according to one of the previous claims.

14. A computer program product loadable in a memory of the at least one processor, wherein the computer program product comprises portions of software code that, when executed by said at least one processor, cause said at least one processor (40a) to execute the steps of the method according to any one of Claims 1 to 12.

## Patentansprüche

1. Verfahren zur Erkennung von Phishing-Angriffen, umfassend:
- Empfangen (1100) eines Quellcodes (COD) einer Webseite oder E-Mail und jeweiliger Quelldaten (SRC), die jeweils einen Absender der Webseite bzw. E-Mail identifizieren;
- Bestimmen (1002), ob die Quelldaten (SRC) in einer ersten Liste (WL) enthalten sind, wobei die erste Liste (WL) Daten autorisierter Quellen umfasst;
- als Reaktion auf die Bestimmung, dass die Quelldaten (SRC) in der ersten Liste (WL) enthalten sind, Klassifizieren der Webseite oder der E-Mail als legitim;
- als Reaktion auf die Bestimmung, dass die Quelldaten (SRC) nicht in der ersten Liste (WL) enthalten sind:
- Erzeugen (1006, 1102) eines Bildes (IMG), das einer Darstellung des Quellcodes (COD) entspricht;
- Bestimmen (1008) mittels eines Objektklassifikators (1200) einer Liste von Objekten (OL) in dem Bild (IMG), wobei der Objektklassifikator (1200) umfasst:
- einen Merkmalsextraktor (1300), der ein konvolutionelles neuronales Netzwerk umfasst, das konfiguriert ist, das Bild (IMG) zu empfangen und als Ausgabe eine Vielzahl von Merkmalskarten (C1, C2, C3, C4, C5) mit unterschiedlichen Größen bereitzustellen, wobei jede Zelle der Merkmalskarte (C1, C2, C3, C4, C5) einen Merkmalsvektor umfasst,
- einen Merkmalsaggregator (1302), der konfiguriert ist, eine oder mehrere aggregierte Merkmalskarten (P1, P2, P3) mit unterschiedlichen Größen als Funktion der Merkmalskarten (C1, C2, C3, C4, C5) zu erzeugen, wobei jede Zelle (C) einer jeweiligen aggregierten Merkmalskarte (P1, P2, P3) einen Vektor aggregierter Merkmale (n) umfasst,
- einen Klassifikator (1304), der konfiguriert ist, das Vorhandensein eines Objekts in jeder Zelle (C) jeder aggregierten Merkmalskarte (P1, P2, P3) als Funktion des jeweiligen aggregierten Merkmalsvektors (n) zu schätzen, wobei der Klassifikator (1304) konfiguriert ist, eine Vielzahl von Objektklassen zu identifizieren und für jede Zelle (C) und jede Objektklasse jeweilige Daten (OS, CP) bereitzustellen, die die Wahrscheinlichkeit angeben, dass die jeweilige Zelle (C) ein Objekt enthält, das zu der jeweiligen Objektklasse gehört, wobei der Klassifikator darauf trainiert ist, eine Vielzahl von Referenzlogos zu erkennen, wobei jede Objektklasse einem jeweiligen Referenzlogo entspricht;
- Analysieren (1206, 1306) der Wahrscheinlichkeiten (OS, CP), um zu überprüfen, ob das Bild (IMG) ein Hauptreferenzlogo (LOGO) enthält, über die Schritte:
- Auswählen der Objektklasse mit der höchsten Wahrscheinlichkeit (CP, OS),
- Bestimmen, ob die Wahrscheinlichkeit der ausgewählten Klasse größer als ein Schwellenwert ist,
- als Reaktion auf die Bestimmung, dass die Wahrscheinlichkeit der ausgewählten Klasse größer als der Schwellenwert ist, Auswählen der ausgewählten Objektklasse als Hauptreferenzlogo (LOGO), und
- als Reaktion auf die Bestimmung, dass die Wahrscheinlichkeit der ausgewählten Klasse nicht größer als der Schwellenwert ist, kein Hauptreferenzlogo (LOGO) auszuwählen;
- als Reaktion auf das Auswählen keines Hauptreferenzlogos (LOGO), Klassifizieren der Webseite oder der E-Mail als legitim; und
- als Reaktion auf das Auswählen der ausgewählten Objektklasse als Hauptreferenzlogo (LOGO), Klassifizieren (1016) der Webseite oder der E-Mail als Phishing-Angriff.

2. Verfahren nach Anspruch 1, umfassend:
- Bestimmen (1002), ob die Quelldaten (SRC) in einer zweiten Liste (BL) enthalten sind, wobei die zweite Liste (BL) Daten schädlicher Quellen umfasst; und
- als Reaktion auf die Bestimmung, dass die Quelldaten (SRC) in der zweiten Liste (BL) enthalten sind, Klassifizieren (1016) der Webseite oder der E-Mail als Phishing-Angriff.

3. Verfahren nach Anspruch 1 oder Anspruch 2, umfassend:
- als Reaktion auf das Auswählen der ausgewählten Objektklasse als Hauptreferenzlogo (LOGO), Bestimmen (1012), ob die Quelldaten (SRC) in einer dritten Liste (DL) enthalten sind, wobei die dritte Liste (DL) für die ausgewählte Objektklasse autorisierte Quelldaten umfasst;
- als Reaktion auf die Bestimmung, dass die Quelldaten (SRC) in der dritten Liste (DL) enthalten sind, Klassifizieren der Webseite oder der E-Mail als legitim; und
- als Reaktion auf die Bestimmung, dass die Quelldaten (SRC) nicht in der dritten Liste (DL) enthalten sind, Klassifizieren (1016) der Webseite oder der E-Mail als Phishing-Angriff.

4. Verfahren nach einem der vorhergehenden Ansprüche, wobei das Empfangen (1100) des Quellcodes (COD) und der Quelldaten (SRC) umfasst:
- Empfangen (1100) des Quellcodes (COD) und der Quelldaten (SRC) einer Webseite über das HTTP-Protokoll; und/oder
- Empfangen (1100) des Quellcodes (COD) und der Quelldaten (SRC) einer E-Mail über das POP3-, IMAP- oder SMTP-Protokoll.

5. Verfahren nach einem der vorhergehenden Ansprüche, wobei das Empfangen (1100) des Quellcodes (COD) und der Quelldaten (SRC) umfasst:
- Abfangen (1100) einer HTTP-Kommunikation und Extrahieren des Quellcodes (COD) und der Quelldaten (SRC) einer Webseite aus der HTTP-Kommunikation; und/oder
- Abfangen (1100; 600) einer POP3-, IMAP- oder SMTP-Kommunikation und Extrahieren des Quellcodes (COD) und der Quelldaten (SRC) einer E-Mail aus der POP3-, IMAP- oder SMTP-Kommunikation.

6. Verfahren nach einem der vorhergehenden Ansprüche, wobei der Klassifikator (1304) mit YOLOv5 oder YOLOv7 implementiert ist.

7. Verfahren nach einem der vorhergehenden Ansprüche, wobei der Klassifikator (1304) umfasst:
- für jede aggregierte Merkmalskarte (P1, P2, P3) einen jeweiligen Subklassifikator (H, H1, H2, H3), der konfiguriert ist, den aggregierten Merkmalsvektor (n) einer Zelle (C) der jeweiligen aggregierten Merkmalskarte (P1, P2, P3) zu empfangen und als Ausgabe für jede Objektklasse jeweilige Daten (OS, CP) bereitzustellen, die eine jeweilige Wahrscheinlichkeit angeben, dass die Zelle (C) ein Objekt umfasst, das zu der jeweiligen Objektklasse gehört.

8. Verfahren nach Anspruch 7, wobei der Subklassifikator (H) konfiguriert ist, Daten (POS) bereitzustellen, die eine relative Position eines Objekts bezüglich der jeweiligen Zelle (C) angeben, und Daten (DIM), die eine relative Größe eines Objekts bezüglich der jeweiligen Zelle (C) angeben.

9. Verfahren nach Anspruch 8, wobei der Objektklassifikator (1200) umfasst:
- ein Nachverarbeitungsmodul (1306), das konfiguriert ist, eine Objektliste (OL) durch Analysieren der von dem Klassifikator (1306) bereitgestellten Daten zu erzeugen, um Objekte in dem Bild (IMG) zu identifizieren, wobei das Nachverarbeitungsmodul (1306) konfiguriert ist, auf die von dem Klassifikator (1304) bereitgestellten Daten eine Non-Maximum Suppression anzuwenden, wobei die Objektliste (OL) für jedes erkannte Objekt umfasst:
- Daten, die eine aus den Objektklassen ausgewählte Objektklasse identifizieren;
- Daten, die die Zuverlässigkeit der Schätzung angeben, dass das Bild (IMG) das jeweilige Objekt umfasst; und
- optional Daten, die die Position und Größe des Objekts in dem Bild (IMG) angeben.

10. Verfahren nach einem der vorhergehenden Ansprüche 7 bis 9, wobei der Subklassifikator (H) konfiguriert ist, die Daten (POS), die eine relative Position eines Objekts bezüglich der jeweiligen Zelle (C) angeben, und die Daten (DIM), die eine relative Größe eines Objekts bezüglich der jeweiligen Zelle (C) angeben, nur während einer Trainingsphase bereitzustellen.

11. Verfahren nach einem der vorhergehenden Ansprüche, wobei die Höhe und die Breite jeder aggregierten Merkmalskarte (P1, P2, P3) jeweils kleiner als 50 sind.

12. Verfahren nach einem der vorhergehenden Ansprüche, umfassend:
- Analysieren des Quellcodes (COD) einer Webseite oder E-Mail, um Links zu erkennen, und Wiederholen der folgenden Schritte für jeden erkannten Link:
- Anfordern des Quellcodes (COD) für den jeweiligen Link, und
- Wiederholen der Schritte des Anspruchs 1 für jeden angeforderten Quellcode (COD).

13. System, umfassend mindestens einen Computer (DEV, 400, SRVL, SRVDMZ, SRVR), der konfiguriert ist, das Verfahren nach einem der vorhergehenden Ansprüche zu implementieren.

14. Computerprogrammprodukt, das in einen Speicher des mindestens einen Prozessors ladbar ist, wobei das Computerprogrammprodukt Softwarecodeabschnitte umfasst, die, wenn sie von dem mindestens einen Prozessor ausgeführt werden, den mindestens einen Prozessor (40a) veranlassen, die Schritte des Verfahrens nach einem der Ansprüche 1 bis 12 auszuführen.

## Revendications

1. Procédé de détection d'attaques de phishing, comprenant:
- recevoir (1100) un code source (COD) d'une page web ou d'un e-mail, et des données sources respectives (SRC) identifiant respectivement un expéditeur de la page web ou de l'e-mail ;
- déterminer (1002) si lesdites données sources (SRC) sont incluses dans une première liste (WL), ladite première liste (WL) comprenant des données de sources autorisées ;
- en réponse à la détermination que lesdites données sources (SRC) sont incluses dans ladite première liste (WL), classer ladite page web ou ledit e-mail comme légitime ;
- en réponse à la détermination que lesdites données sources (SRC) ne sont pas incluses dans ladite première liste (WL) :
- générer (1006, 1102) une image (IMG) qui correspond à un rendu dudit code source (COD) ;
- déterminer (1008), au moyen d'un classificateur d'objets (1200), une liste d'objets (OL) dans ladite image (IMG), ledit classificateur d'objets (1200) comprenant :
- un extracteur de caractéristiques (1300) comprenant un réseau neuronal convolutif configuré pour recevoir ladite image (IMG) et fournir en sortie une pluralité de cartes de caractéristiques (C1, C2, C3, C4, C5) de tailles différentes, chaque cellule de la carte de caractéristiques (C1, C2, C3, C4, C5) comprenant un vecteur de caractéristiques,
- un agrégateur de caractéristiques (1302) configuré pour générer une ou plusieurs cartes de caractéristiques agrégées (P1, P2, P3) de tailles différentes en fonction desdites cartes de caractéristiques (C1, C2, C3, C4, C5), chaque cellule (C) d'une carte de caractéristiques agrégée respective (P1, P2, P3) comprenant un vecteur de caractéristiques agrégées (*n*),
- un classificateur (1304) configuré pour estimer la présence d'un objet dans chaque cellule (C) de chaque carte de caractéristiques agrégée (P1, P2, P3) en fonction du vecteur de caractéristiques agrégées respectif (*n*), ledit classificateur (1304) étant configuré pour identifier une pluralité de classes d'objets et fournir, pour chaque cellule (C) et chaque classe d'objet, des données respectives (OS, CP) indiquant la probabilité que la cellule respective (C) comprenne un objet appartenant à la classe d'objet respective, ledit classificateur étant entraîné pour détecter une pluralité de logos de référence, chaque classe d'objet correspondant à un logo de référence respectif ;
- analyser (1206, 1306) lesdites probabilités (OS, CP) afin de vérifier si ladite image (IMG) comprend un logo de référence principal (LOGO), selon les étapes consistant à :
- sélectionner la classe d'objet ayant la probabilité la plus élevée (CP, OS),
- déterminer si la probabilité de la classe sélectionnée est supérieure à un seuil,
- en réponse à la détermination que la probabilité de la classe sélectionnée est supérieure audit seuil, sélectionner la classe d'objet sélectionnée comme logo de référence principal (LOGO), et
- en réponse à la détermination que la probabilité de la classe sélectionnée n'est pas supérieure audit seuil, ne sélectionner aucun logo de référence principal (LOGO) ;
- en réponse à la non-sélection d'un logo de référence principal (LOGO), classer ladite page web ou ledit e-mail comme légitime ; et
- en réponse à la sélection de la classe d'objet sélectionnée comme logo de référence principal (LOGO), classer (1016) ladite page web ou ledit e-mail comme attaque de phishing.

2. Procédé selon la revendication 1, comprenant :
- déterminer (1002) si lesdites données sources (SRC) sont incluses dans une deuxième liste (BL), ladite deuxième liste (BL) comprenant des données de sources malveillantes ; et
- en réponse à la détermination que lesdites données sources (SRC) sont incluses dans ladite deuxième liste (BL), classer (1016) ladite page web ou ledit e-mail comme attaque de phishing.

3. Procédé selon la revendication 1 ou la revendication 2, comprenant :
- en réponse à la sélection de la classe d'objet sélectionnée comme logo de référence principal (LOGO), déterminer (1012) si lesdites données sources (SRC) sont incluses dans une troisième liste (DL), ladite troisième liste (DL) comprenant, pour ladite classe d'objet sélectionnée, des données sources autorisées ;
- en réponse à la détermination que lesdites données sources (SRC) sont incluses dans ladite troisième liste (DL), classer ladite page web ou ledit e-mail comme légitime ; et
- en réponse à la détermination que lesdites données sources (SRC) ne sont pas incluses dans ladite troisième liste (DL), classer (1016) ladite page web ou ledit e-mail comme attaque de phishing.

4. Procédé selon l'une quelconque des revendications précédentes, dans lequel le fait de recevoir (1100) ledit code source (COD) et lesdites données sources (SRC) comprend :
- recevoir (1100) ledit code source (COD) et lesdites données sources (SRC) d'une page web via le protocole HTTP ; et/ou
- recevoir (1100) ledit code source (COD) et lesdites données sources (SRC) d'un e-mail via le protocole POP3, IMAP ou SMTP.

5. Procédé selon l'une quelconque des revendications précédentes, dans lequel le fait de recevoir (1100) ledit code source (COD) et lesdites données sources (SRC) comprend :
- intercepter (1100) une communication HTTP et extraire ledit code source (COD) et lesdites données sources (SRC) d'une page web à partir de la communication HTTP ; et/ou
- intercepter (1100 ; 600) une communication POP3, IMAP ou SMTP et extraire ledit code source (COD) et lesdites données sources (SRC) d'un e-mail à partir de la communication POP3, IMAP ou SMTP.

6. Procédé selon l'une quelconque des revendications précédentes, dans lequel ledit classificateur (1304) est mis en œuvre avec YOLOv5 ou YOLOv7.

7. Procédé selon l'une quelconque des revendications précédentes, dans lequel ledit classificateur (1304) comprend :
- pour chaque carte de caractéristiques agrégée (P1, P2, P3), un sous-classificateur respectif (H, H1, H2, H3) configuré pour recevoir le vecteur de caractéristiques agrégées (n) d'une cellule (C) de la carte de caractéristiques agrégée respective (P1, P2, P3) et fournir en sortie, pour chaque classe d'objet, des données respectives (OS, CP) indiquant une probabilité respective que la cellule (C) comprenne un objet appartenant à la classe d'objet respective.

8. Procédé selon la revendication 7, dans lequel ledit sous-classificateur (H) est configuré pour fournir des données (POS) indiquant une position relative d'un objet par rapport à la cellule respective (C), et des données (DIM) indiquant une taille relative d'un objet par rapport à la cellule respective (C).

9. Procédé selon la revendication 8, dans lequel ledit classificateur d'objets (1200) comprend :
- un module de post-traitement (1306) configuré pour générer une liste d'objets (OL) en analysant les données fournies par ledit classificateur (1306) afin d'identifier des objets dans ladite image (IMG), ledit module de post-traitement (1306) étant configuré pour appliquer une non-maximum suppression aux données fournies par ledit classificateur (1304), ladite liste d'objets (OL) comprenant, pour chaque objet détecté :
- des données identifiant une classe d'objet sélectionnée parmi lesdites classes d'objets ;
- des données identifiant la confiance de l'estimation selon laquelle ladite image (IMG) comprend l'objet respectif ; et
- éventuellement des données indiquant la position et la taille de l'objet dans ladite image (IMG).

10. Procédé selon l'une quelconque des revendications 7 à 9 précédentes, dans lequel ledit sous-classificateur (H) est configuré pour fournir lesdites données (POS) indiquant une position relative d'un objet par rapport à la cellule respective (C) et lesdites données (DIM) indiquant une taille relative d'un objet par rapport à la cellule respective (C) uniquement pendant une phase d'entraînement.

11. Procédé selon l'une quelconque des revendications précédentes, dans lequel la hauteur et la largeur de chaque carte de caractéristiques agrégée (P1, P2, P3) sont inférieures à 50.

12. Procédé selon l'une quelconque des revendications précédentes, comprenant :
- analyser ledit code source (COD) d'une page web ou d'un e-mail afin de détecter des liens, et répéter les étapes suivantes pour chaque lien détecté :
- demander le code source (COD) pour le lien respectif, et
- répéter les étapes de la revendication 1 pour chaque code source (COD) demandé.

13. Système comprenant au moins un ordinateur (DEV, 400, SRVL, SRVDMZ, SRVR) configuré pour mettre en œuvre le procédé selon l'une quelconque des revendications précédentes.

14. Produit programme d'ordinateur pouvant être chargé dans une mémoire de l'au moins un processeur, ledit produit programme d'ordinateur comprenant des portions de code logiciel qui, lorsqu'elles sont exécutées par ledit au moins un processeur, amènent ledit au moins un processeur (40a) à exécuter les étapes du procédé selon l'une quelconque des revendications 1 à 12.
